# FASCICULE DE BREVET EUROPEEN

(11) **EP 2 247 453 B1**
(45) Date de publication et mention de la délivrance du brevet: **06.07.2011**
(21) Numéro de dépôt: 09704372.3
(22) Date de dépôt: 14.01.2009
(51) Int. Cl.: B60C 15/00

(54) **ARMATURE DE CARCASSE POUR PNEUMATIQUE D'AVION**
UNTERBAUVERSTÄRKUNG FÜR FLUGZEUGREIFEN
CARCASS REINFORCEMENT FOR AIRPLANE TYRE

(30) Priorité: 24.01.2008 FR 0850429
(43) Date de publication de la demande: 10.11.2010
(73) Titulaire: Société de Technologie MICHELIN, 63000 Clermont-Ferrand (FR); Michelin Recherche et Technique S.A., 1763 Granges-Paccot (CH)
(72) Inventeur: CHAMBRIARD, François, F-63110 Beaumont (FR); DENDIEVEL, Jean-Luc, F-63800 Cournon d'Auvergne (FR)
(74) Mandataire: Le Cam, Stéphane Georges Elie
(86) Numéro de dépôt international: PCT/EP2009/050332
(87) Numéro de publication internationale: WO 2009/092648

(56) Documents cités:
- EP-A- 0 599 575
- EP-A- 0 756 950
- EP-A- 1 238 828
- EP-A- 1 808 313
- WO-A-02/085646
- US-A- 4 887 655
- US-A- 5 085 260

## Description

La présente invention concerne un pneumatique d'avion, dont la pression de gonflage est supérieure à 9 bars et la flèche supérieure à 30%, et dont l'usage se caractérise par des conditions de pression, de charge et de vitesse élevées.

La flèche d'un pneumatique est, par définition, sa déformation radiale, ou sa variation de hauteur radiale, lorsque celui-ci passe d'un état gonflé non chargé à un état gonflé chargé en statique, dans des conditions de pression et de charge nominales. Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le crochet. Le diamètre extérieur du pneumatique est mesuré en statique dans un état non chargé gonflé à la pression nominale.

Bien que non limitée à cette utilisation, l'invention est plus particulièrement décrite dans le cas d'un pneumatique à armature de carcasse radiale, utilisé sur un avion de ligne, et dont la pression de gonflage nominale est 17 bars, la charge statique nominale 34 tonnes et la vitesse maximale 380 km/h.

Dans ce qui suit, on entend par :
- « Plan radial » : un plan contenant l'axe de rotation du pneumatique.
- « Plan équatorial » : le plan perpendiculaire à l'axe de rotation du pneumatique et passant par le milieu de la bande de roulement du pneumatique.
- « Direction radiale » : une direction perpendiculaire à l'axe de rotation du pneumatique.
- « Direction axiale » : une direction parallèle à l'axe de rotation du pneumatique.
- « Constituant X radialement intérieur, respectivement radialement extérieur, au constituant Y » : la distance radiale du constituant X, par rapport à l'axe de rotation du pneumatique, est inférieure, respectivement supérieure, à la distance radiale du constituant Y, par rapport à l'axe de rotation du pneumatique.
- « Constituant X axialement intérieur, respectivement axialement extérieur, au constituant Y » : la distance axiale du constituant X, par rapport au plan équatorial du pneumatique, est inférieure, respectivement supérieure, à la distance axiale du constituant Y, par rapport au plan équatorial du pneumatique.
- « Intérieur du pneumatique » : l'intérieur de la cavité du pneumatique sur laquelle agit la pression de gonflage.

L'architecture d'un tel pneumatique d'avion est par exemple décrite dans le brevet EP 1 381 525.

Un tel pneumatique comprend une bande de roulement, destinée à venir en contact avec le sol et réunie par l'intermédiaire de deux flancs à deux bourrelets, chaque bourrelet assurant la liaison du pneumatique avec une jante de montage.

Il comprend en outre une armature de renforcement, constituée d'une armature de sommet, radialement intérieure à la bande de roulement, et d'une armature de carcasse radiale, radialement intérieure à l'armature de sommet.

L'armature de carcasse radiale d'un pneumatique d'avion comporte habituellement une pluralité de couches d'éléments de renforcement, parallèles entre eux et faisant, avec la direction circonférentielle, un angle compris entre 85° et 95°. Les couches d'éléments de renforcement de l'armature de carcasse, appelées couches d'armature de carcasse, sont ancrées, dans chaque bourrelet, à au moins un élément de renforcement circonférentiel ou tringle, Les couches d'armature de carcasse comprennent le plus souvent au moins une couche dite interne, enroulée autour de la tringle en allant de l'intérieur vers l'extérieur du pneumatique pour former un retournement se terminant par une extrémité, et au moins une couche dite externe, enroulée autour de la tringle en allant de l'extérieur vers l'intérieur du pneumatique et axialement extérieure à toutes les couches internes et à leurs retournements respectifs, dans le flanc.

Les éléments de renforcement des couches d'armature de carcasse, pour les pneumatiques d'avion, sont le plus souvent des câbles constitués de filés de filaments textiles, préférentiellement en polyamides aliphatiques ou en polyamides aromatiques.

Les propriétés mécaniques en extension des éléments de renforcement textiles (module, allongement et force à la rupture) sont mesurées après un conditionnement préalable. Par "conditionnement préalable", on entend le stockage des éléments de renforcement textiles pendant au moins 24 heures, avant mesure, dans une atmosphère standard selon la norme européenne DIN EN 20139 (température de 20 ± 2°C ; hygrométrie de 65 ± 2 %). Les mesures sont réalisées de manière connue à l'aide d'une machine de traction ZWICK GmbH & Co (Allemagne) de type 1435 ou de type 1445. Les éléments de renforcement textiles subissent une traction sur une longueur initiale de 400 mm à une vitesse nominale de 200 mm/min. Tous les résultats sont une moyenne de 10 mesures.

Habituellement, la couche interne, axialement la plus proche de la tringle, est séparée des retournements et des couches externes, qui lui sont axialement extérieurs, par au moins un mélange polymérique de remplissage de bourrelet, adjacent et radialement extérieur à la tringle.

Concernant le mélange polymérique de remplissage de bourrelet, on entend par « module d'élasticité », un module sécant d'extension à 10 % de déformation et à température ambiante. Les mesures de module sont effectuées en traction selon la norme AFNOR-NFT-46002 de septembre 1988 : on mesure en seconde élongation (c'est-à-dire après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Le point radialement le plus extérieur du mélange polymérique de remplissage de bourrelet, radialement au-delà duquel les couches d'armature de carcasse sont couplées deux à deux, est appelé point de couplage.

Au sens de l'invention, le couplage entre deux couches d'armature de carcasse adjacentes se caractérise par une distance entre leurs fibres neutres respectives au plus égale à deux fois le diamètre de section d'un élément de renforcement constitutif des couches d'armature de carcasse.

Le positionnement des extrémités de retournements et le couplage des retournements entre eux et avec les couches d'armature de carcasse adjacentes, radialement à l'extérieur du point de couplage, garantissent l'ancrage des retournements, dans les conditions de charge, pression et vitesse particulièrement sévères d'un tel pneumatique.

En utilisation, les sollicitations mécaniques de roulage induisent des cycles de flexion du pneumatique, qui s'enroule sur les crochets de jante.

Dans ce qui suit, on entend par « zone de flexion sur jante » la partie du pneumatique dont la frontière extérieure s'enroule sur le crochet de jante, en adoptant sa géométrie dans la zone de contact, sous l'action combinée de la pression et de la charge.

Les cycles de flexion génèrent, dans les matériaux polymériques de la zone de flexion sur jante, et plus particulièrement dans ceux situés à proximité immédiate des extrémités de retournements, des contraintes et des déformations, qui peuvent entraîner dans la durée une dégradation du pneumatique nécessitant son remplacement.

Ces cycles de flexion génèrent en outre, dans les parties de couches d'armature de carcasse situées dans la zone de flexion sur jante, des variations de courbure combinées avec des variations de tension. Ces variations de tension, en particulier dans les couches axialement les plus extérieures, peuvent avoir des valeurs minimales, correspondant à une mise en compression qui peut induire la rupture du matériau constitutif des éléments de renforcement des couches et donc une dégradation du pneumatique.

Le brevet EP 0 599 575 a déjà décrit, dans le cas d'une armature de carcasse constituée d'une pluralité de couches d'éléments de renforcement, une solution pour prévenir les risques de rupture des couches d'armature de carcasse, en positionnant les extrémités de retournements, en dehors de la zone de flexion sur jante. La zone de flexion sur jante, dans le cadre du brevet ci-dessus référencé, est délimitée par deux droites perpendiculaires aux couches internes, enroulées de l'intérieur vers l'extérieur. La première droite passe par le point de contact, axialement le plus extérieur, entre le pneumatique, gonflé à la pression nominale et non chargé, et le crochet de jante. La deuxième droite passe par le point de contact, axialement le plus extérieur, entre le pneumatique, gonflé à la pression nominale et chargé à deux fois sa charge statique nominale, et le crochet de jante. Les extrémités de retournements sont positionnées soit radialement à l'extérieur de la droite radialement la plus extérieure, soit radialement à l'intérieur de la droite radialement la plus intérieure. Les extrémités de retournements, positionnées radialement à l'extérieur de la droite radialement la plus extérieure, induisent une épaisseur de bourrelet relativement importante, dans la zone de flexion sur jante, pénalisante en terme de coût de matière. Les extrémités de retournements, positionnées radialement à l'intérieur de la droite radialement la plus intérieure, induisent un risque de dégradation prématurée du pneumatique, par déroulement des couches internes.

Le brevet EP 1 238 828 a également décrit une solution de prévention des risques de rupture des couches d'armature de carcasse, par réduction, dans la zone de flexion sur jante, du nombre de retournements. Cette solution consiste à avoir au moins une couche interne sans retournement, c'est-à-dire dont l'extrémité est positionnée radialement à l'intérieur du point radialement le plus intérieur de la tringle. Pour des conditions de charge, pression et vitesse sévères, l'absence de retournement peut augmenter le risque de déroulement de la couche interne correspondante et donc du pneumatique.

Les inventeurs se sont donnés pour objectif d'améliorer la tenue à la rupture des couches d'armature de carcasse d'un pneumatique d'avion, dans la zone de flexion sur jante, pour des conditions de charge, pression et vitesse sévères, en minimisant le coût de matière.

Cet objectif a été atteint, selon l'invention, pour un pneumatique d'avion, dont la pression de gonflage est supérieure à 9 bars et la flèche supérieure à 30%, comprenant une bande de roulement, réunie par l'intermédiaire de deux flancs à deux bourrelets assurant la liaison du pneumatique avec une jante de montage et comportant au moins une tringle, une armature de carcasse, comprenant au moins une couche interne, enroulée autour de la tringle en allant de l'intérieur vers l'extérieur du pneumatique pour former un retournement se terminant par une extrémité, et au moins une couche externe, enroulée autour de la tringle en allant de l'extérieur vers l'intérieur du pneumatique, et axialement extérieure, dans le flanc, à toute couche interne, la couche interne, axialement la plus proche de la tringle, étant découplée, sur au moins une partie de sa longueur et dans la zone adjacente et radialement extérieure à la tringle, des retournements et des couches d'armature de carcasse qui lui sont axialement extérieurs, par au moins un mélange polymérique de remplissage de bourrelet, dont le point radialement le plus extérieur est appelé point de couplage, l'extrémité d'au moins un retournement, étant radialement intérieure au point de couplage, et au moins un retournement, d'extrémité radialement intérieure au point de couplage, étant découplé, sur au moins une partie de sa longueur et sur au moins sa face axialement extérieure, de toute autre couche d'armature de carcasse ou de tout autre retournement, par au moins un mélange polymérique de remplissage de bourrelet.

Les études réalisées sur un pneumatique conforme à l'invention ont mis en évidence que, sous l'action des sollicitations cycliques subies par le pneumatique, les couches externes présentent moins de dégradation, voire pas de dégradation, en comparaison de celles d'un pneumatique tel que décrit dans le brevet EP 1 381 525. Les inventeurs pensent interpréter ce résultat par le positionnement de l'extrémité d'au moins un retournement, radialement à l'intérieur du point de couplage. L'élimination d'au moins un retournement dans la zone de flexion sur jante, qui réduit l'épaisseur de ladite zone, permet de diminuer la mise en compression des couches externes, axialement les plus extérieures, et donc de réduire le risque de rupture locale des éléments de renforcement desdites couches externes. On note en outre un avantage d'économie de matière et donc de réduction de coût.

Par ailleurs, les inventeurs pensent que le découplage d'au moins un retournement, de toute autre couche, sur au moins sa face orientée axialement vers l'extérieur et sur au moins une partie de sa longueur, contribue à un ancrage efficace de ce retournement. En effet, ce découplage semble limiter le déroulement de la couche interne correspondante, en introduisant un blocage mécanique du retournement par le mélange polymérique de remplissage de bourrelet, à la différence de solutions plus usuelles proposant un couplage du retournement avec les couches d'armature de carcasse adjacentes en vue de créer un ancrage du retournement.

Un premier mode de réalisation de l'invention, dans le cas d'une armature de carcasse comprenant au moins deux couches internes, est d'avoir au moins un retournement, dont l'extrémité est radialement extérieure au point de couplage, et couplé, sur au moins une partie de sa longueur et sur ses deux faces, avec les couches d'armature de carcasse adjacentes. Ce retournement, dont l'extrémité est radialement extérieure au point de couplage, est ainsi ancré, sur au moins une partie de sa longueur et sur ses deux faces, par couplage avec les couches d'armature de carcasse adjacentes.

Un deuxième mode de réalisation préféré de l'invention est de positionner les extrémités de tous les retournements, radialement à l'intérieur du point de couplage. Cette solution permet de diminuer encore le nombre de couches dans la zone de flexion sur jante, donc l'épaisseur du pneumatique dans cette zone et, par conséquent, la mise en compression des couches externes induisant la dégradation du pneumatique.

Selon une variante de l'un quelconque des modes de réalisation précédents, il est avantageux d'avoir au moins un retournement, d'extrémité radialement intérieure au point de couplage, couplé, sur au moins une partie de sa longueur et sur au moins une face, avec au moins une couche d'armature de carcasse ou au moins un retournement. Cet ancrage par couplage d'au moins un retournement améliore l'accrochage de l'armature de carcasse, en venant compléter l'ancrage par blocage mécanique décrit précédemment. Dans le cas d'une seule couche interne, le retournement unique est alors couplé sur une partie de sa longueur et découplé sur une autre partie de sa longueur. Dans le cas d'au moins deux couches internes, au moins un retournement est couplé et au moins un retournement est découplé.

Selon une autre variante de réalisation de l'invention, il est avantageux d'avoir tous les retournements, d'extrémités radialement intérieures au point de couplage, découplés, sur au moins une partie de leur longueur et sur leurs deux faces, de toute autre couche d'armature de carcasse et de tout autre retournement. L'ancrage de chaque retournement est assuré par son blocage mécanique par au moins un mélange polymérique de remplissage de bourrelet.

Avantageusement encore, selon l'invention, au moins un retournement, d'extrémité radialement intérieure au point de couplage, est couplé avec au moins une couche d'armature de carcasse ou un retournement, sur au moins une face et sur une distance au moins égale à dix fois le diamètre d'un élément de renforcement de couche d'armature de carcasse. Cette distance minimale permet de garantir la tenue mécanique du couplage.

Préférentiellement, selon l'invention, l'extrémité de retournement, radialement intérieure au point de couplage et radialement la plus proche du point de couplage, est positionnée, par rapport au point de la tringle radialement le plus intérieur, à une distance radiale au plus égale à 0.9 fois la distance radiale du point de couplage au point de la tringle radialement le plus intérieur. Cette caractéristique permet d'éviter le positionnement des extrémités de retournements, radialement intérieures au point de couplage, dans la zone de flexion sur jante qui peut s'étendre radialement à l'intérieur du point de couplage, et donc de provoquer des dégradations dans les mélanges polymériques au voisinage de ces extrémités, pouvant entrainer la dégradation du pneumatique.

Il est encore avantageux, selon l'invention, de positionner l'extrémité de retournement, radialement intérieure au point de couplage et radialement la plus proche du point de la tringle radialement le plus intérieur, à une distance radiale, par rapport au point de la tringle radialement le plus intérieur, au moins égale au diamètre du cercle circonscrit à une section méridienne de la tringle. Cette caractéristique garantit une distance radiale minimum des extrémités de tous les retournements, nécessaire pour assurer un ancrage suffisant, soit par couplage, soit par blocage.

Préférentiellement, selon l'invention, les éléments de renforcement des couches d'armature de carcasse sont constitués de matériaux textiles.

Avantageusement, les éléments de renforcement des couches d'armature de carcasse sont de type polyamide aromatique, polyamide aliphatique ou de type hybride. Des éléments de renforcement de type hybride sont par exemple décrits dans le brevet EP 1 381 525.

Préférentiellement, selon l'invention, un mélange polymérique de remplissage de bourrelet a un module d'extension sécant à 10% de déformation au moins égal à 3 MPA. Un tel niveau de module améliore encore le blocage mécanique des retournements, découplés des autres couches, au moins sur une face.

Il est encore avantageux, selon l'invention, d'avoir au moins deux mélanges polymériques de remplissage de bourrelet, dont au moins un adjacent à la tringle. Des mélanges polymériques de remplissage de bourrelet différents permettent d'optimiser le fonctionnement thermomécanique du bourrelet.

Avantageusement encore, le module d'extension sécant à 10% de déformation du mélange polymérique de remplissage de bourrelet, adjacent et radialement extérieur à la tringle, est au moins égal aux modules d'extension sécants à 10% de déformation des autres mélanges polymériques de remplissage de bourrelet. Cette solution permet de réaliser un étagement des rigidités, dont la plus forte correspond au mélange polymérique de remplissage de bourrelet adjacent et radialement extérieur à la tringle.

Les caractéristiques et autres avantages de l'invention seront mieux compris à l'aide de la description non limitative des exemples représentés sur les figures annexées 1 à 5 :
- la figure 1 présente une vue méridienne d'un schéma d'une partie d'un pneumatique réalisé selon un premier exemple de réalisation de l'invention.
- la figure 2 présente une vue méridienne d'un schéma d'une partie d'un pneumatique réalisé selon un deuxième exemple de réalisation de l'invention.
- la figure 3 présente une vue méridienne d'un schéma d'une partie d'un pneumatique réalisé selon un troisième exemple de réalisation de l'invention.
- la figure 4 présente une vue méridienne d'un schéma d'une partie d'un pneumatique réalisé selon un quatrième exemple de réalisation de l'invention.
- la figure 5 présente une vue méridienne d'un schéma d'une partie d'un pneumatique réalisé selon un cinquième exemple de réalisation de l'invention.

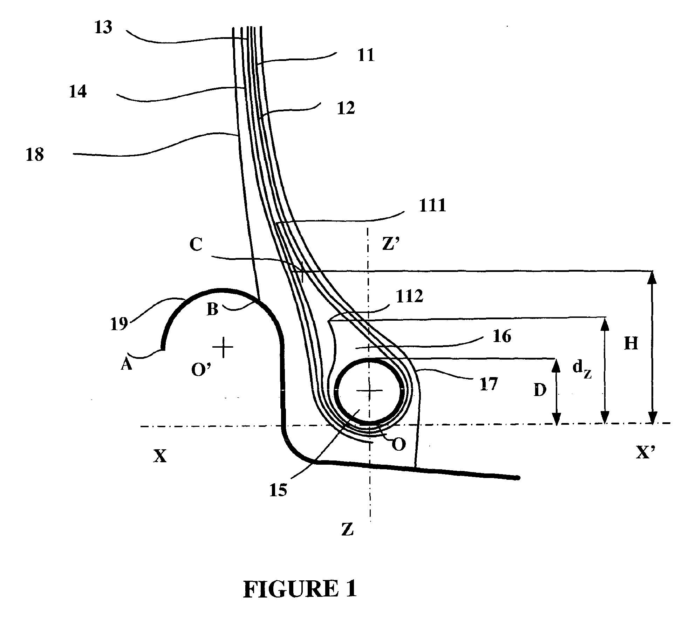

Les figures 1 à 5 ne sont pas représentées à l'échelle.

La figure 1 représente un schéma d'une partie d'un pneumatique monté sur une jante de montage 19.

Sur la figure 1, le bourrelet 17 est relié à la bande de roulement du pneumatique, non représentée, par un flanc 18 et assure la liaison du pneumatique avec la jante de montage 19, dont le crochet est une portion de cercle de centre O'.

Au niveau du crochet de jante, le point A représente l'extrémité axialement la plus extérieure du crochet de jante, et le point B le point de contact entre le pneumatique et le crochet de jante, axialement le plus extérieur, le pneumatique étant gonflé à sa pression nominale.

L'armature de carcasse est constituée de deux couches internes 11 et 12, enroulées autour de la tringle 15 en allant de l'intérieur vers l'extérieur du pneumatique en formant deux retournements d'extrémités respectives 111 et 112, et de deux couches externes 13 et 14, enroulées autour de la tringle 15 en allant de l'extérieur vers l'intérieur du pneumatique.

L'unique mélange polymérique de remplissage de bourrelet 16 assure le découplage de la couche interne 12 axialement la plus proche de la tringle, de son propre retournement d'extrémité 112, et du retournement de l'autre couche interne 11 d'extrémité 111.

Le point de couplage C est le point radialement le plus extérieur du mélange polymérique de remplissage de bourrelet 16, radialement au-delà duquel le retournement d'extrémité 111 et les couches 11, 12, 13 et 14 sont deux à deux couplés. La distance radiale du point de couplage C au point O, radialement le plus intérieur de la tringle, est notée H et égale à 50 mm, soit la distance du point O au point B.

Le diamètre du cercle circonscrit à la section méridienne de la tringle est noté D et est égal à 21.5 mm, la tringle étant dimensionnée pour résister à une pression de gonflage égale à quatre fois la pression nominale.

L'extrémité 111 de la couche 1 est radialement extérieure au point de couplage C. L'extrémité 112 de la couché 12 est radialement intérieure au point de couplage C. Dans cet exemple, l'extrémité 112 de la couche 12 est la seule extrémité radialement intérieure au point de couplage C, donc elle est à la fois la plus proche du point C et la plus proche du point O. La distance radiale d_{z} de l'extrémité 112 au point O, radialement le plus intérieur de la tringle, est égale à 38 mm. Conformément à l'invention, cette distance est au moins égale à D, soit 21.5 mm, et au plus égale à 0.9 fois H, soit 45 mm.

Le retournement de la couche interne 11 est couplé, sur sa face orientée axialement vers l'extérieur, avec la couche externe 13 et couplé, sur sa face orientée axialement vers l'intérieur, avec la couche externe 12 . Conformément à l'invention, le retournement de la couche interne 12 est découplé, sur sa face axialement extérieure, du retournement axialement le plus proche, c'est-à-dire du retournement de la couche 11, par le mélange polymérique de remplissage de bourrelet 16.

Les éléments de renforcement textiles des couches d'armature de carcasse sont de type hybride. La force à rupture d'un tel élément de renforcement hybride, mesuré sur un élément de renforcement extrait d'un pneumatique neuf, est égale à 104 daN.

Le module sécant d'extension à 10% d'allongement du mélange polymérique de remplissage de bourrelet 16 est égal à 25 MPa, donc au moins égal à 3 MPa, conformément à l'invention.

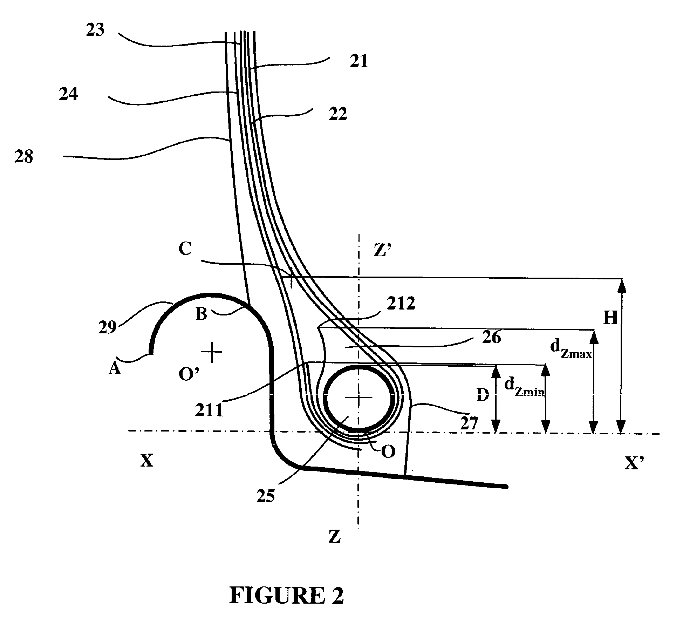

L'exemple de la figure 2 diffère de celui de la figure 1 uniquement au niveau du positionnement géométrique des extrémités de retournements 211 et 212 des couches internes 21 et 22, les autres caractéristiques (propriétés mécaniques des éléments de renforcement textiles et du mélange polymérique de remplissage de bourrelet, position radiale du point de couplage C, diamètre de tringle) étant identiques. Toutes les extrémités de retournements sont radialement à l'intérieur du point de couplage C, et un retournement est couplé, sur toute sa longueur, avec la couche externe axialement la plus intérieure.

Dans la figure 2, l'extrémité 211 de la couche interne 21, axialement la plus intérieure, est radialement intérieure à l'extrémité 212 de la couche interne 22. Conformément à l'invention, le retournement de la couche interne 21 est couplé, sur sa face axialement extérieure, à la couche externe 23, et découplé, sur sa face axialement intérieure, du retournement de la couche interne 22, par le mélange polymérique de remplissage de bourrelet. 26.

La distance radiale d_{z max} de l'extrémité 212 est égale à 38 mm, donc au plus égale à 0.9 fois H, soit 45 mm, conformément à l'invention.

La distance radiale d_{z min} de l'extrémité 211 est égale à 23 mm, donc au moins égale à D, soit 21.5 mm, conformément à l'invention.

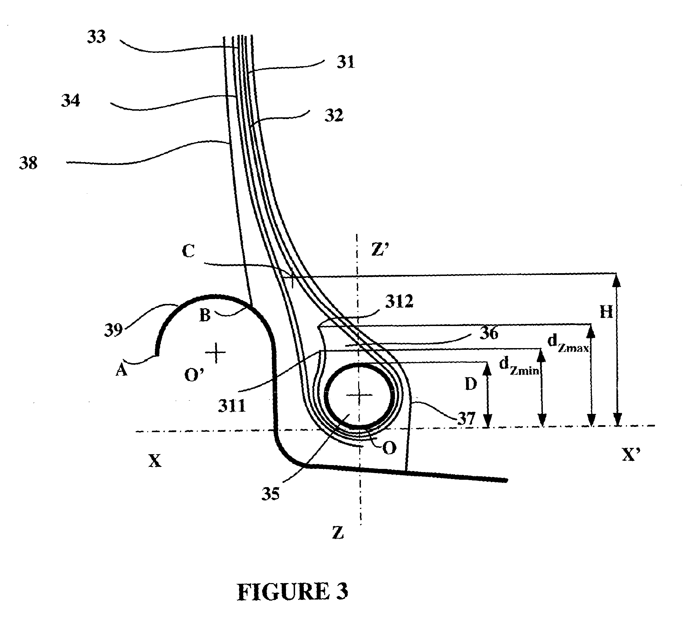

L'exemple de la figure 3 diffère de celui de la figure 1 uniquement au niveau du positionnement géométrique des extrémités de retournements 311 et 312 des couches internes 31 et 32, les autres caractéristiques (propriétés mécaniques des éléments de renforcement textiles et du mélange polymérique de remplissage de bourrelet, position radiale du point de couplage C, diamètre de tringle) étant identiques. Toutes les extrémités de retournements sont radialement à l'intérieur du point de couplage C, les retournements sont couplés entre eux et découplés de toute autre couche d'armature de carcasse.

Dans la figure 3, l'extrémité 311 de la couche interne 31, axialement la plus intérieure, est radialement intérieure à l'extrémité 312 de la couche interne 32. Conformément à l'invention, le retournement de la couche interne 31 est découplé, sur sa face axialement extérieure, de la couche externe 33, par le mélange polymérique de remplissage de bourrelet 36, et couplé, sur sa face axialement intérieure, au retournement de la couche interne 32.

La distance radiale d_{z max} de l'extrémité 312 est égale à 38 mm, donc au plus égale à 0.9 fois H, soit 45 mm, conformément à l'invention.

La distance radiale d_{zmin} de l'extrémité 311 est égale à 23 mm, donc au moins égale à D, soit 21.5 mm, conformément à l'invention.

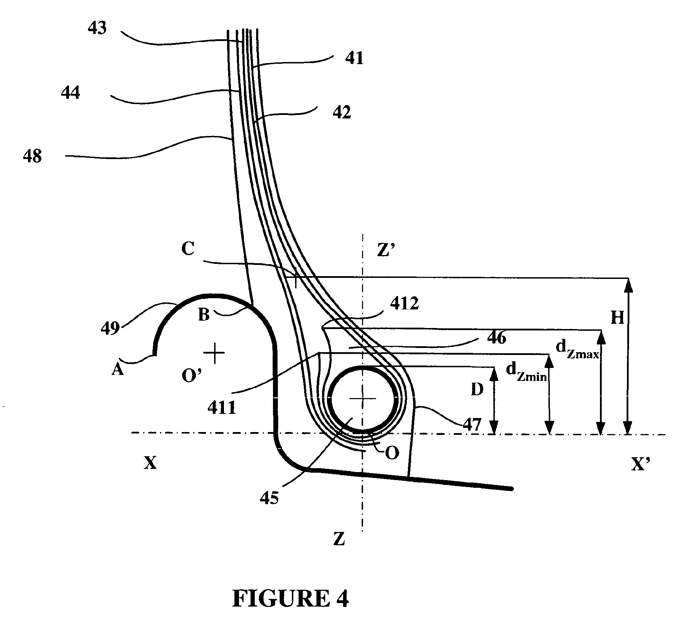

L'exemple de la figure 4 diffère de celui de la figure 1 uniquement au niveau du positionnement géométrique des extrémités de retournements 411 et 412 des couches internes 41 et 42, les autres caractéristiques (propriétés mécaniques des éléments de renforcement textiles et du mélange polymérique de remplissage de bourrelet, position radiale du point de couplage C, diamètre de tringle) étant identiques. Toutes les extrémités de retournements sont radialement à l'intérieur du point de couplage C, les retournements sont découplés entre eux et de toute autre couche d'armature de carcasse.

Dans la figure 4, l'extrémité 411 de la couche interne 41, axialement la plus intérieure, est radialement intérieure à l'extrémité 412 de la couche interne 42. Conformément à l'invention, le retournement de la couche interne 41 est découplé, sur sa face axialement extérieure, de la couche externe 43, et découplé, sur sa face axialement intérieure, du retournement de la couche interne 42. Les deux découplages sont réalisés par le mélange polymérique de remplissage de bourrelet 46.

La distance radiale d_{z max} de l'extrémité 412 est égale à 38 mm, donc au plus égale à 0.9 fois H, soit 45 mm, conformément à l'invention.

La distance radiale d_{z min} de l'extrémité 411 est égale à 23 mm, donc au moins égale à D, soit 21.5 mm, conformément à l'invention.

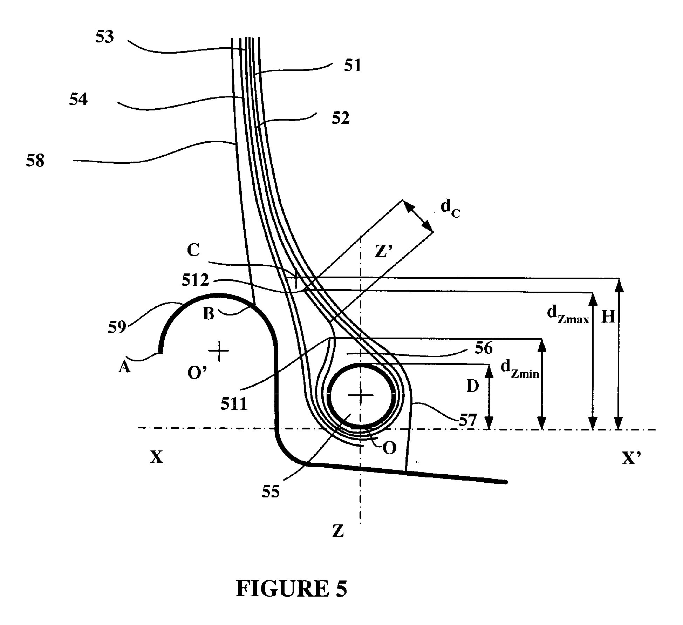

L'exemple de la figure 5 diffère de celui de la figure 1 uniquement au niveau du positionnement géométrique des extrémités de retournements 511 et 512 des couches internes 51 et 52, les autres caractéristiques (propriétés mécaniques des éléments de renforcement textiles et du mélange polymérique de remplissage de bourrelet, position radiale du point de couplage C, diamètre de tringle) étant identiques. Toutes les extrémités de retournements sont radialement à l'intérieur du point de couplage C, les retournements sont couplés entre eux et l'un deux est couplé, au niveau de son extrémité, avec une autre couche d'armature de carcasse.

Dans la figure 5, l'extrémité 511 de la couche interne 51, axialement la plus intérieure, est radialement intérieure à l'extrémité 512 de la couche interne 52. Conformément à l'invention, le retournement de la couche interne 51 est découplé, sur sa face axialement extérieure, de la couche externe 53, par le mélange polymérique de remplissage de bourrelet 56, et couplé, sur sa face axialement intérieure, au retournement de la couche interne 52.

Conformément à la spécificité de la variante, le retournement d'extrémité 512 est couplé, dans sa zone d'extrémité à la couche interne 52, sur une distance d_{c} égale à 15mm, donc au moins égale à 10 fois le diamètre de l'élément de renforcement égal à 1mm.

La distance radiale d_{z max} de l'extrémité 512 est égale à 45 mm, donc au plus égale à 0.9 fois H, soit 45 mm, conformément à l'invention.

La distance radiale d_{z min} de l'extrémité 511 est égale à 30 mm, donc au moins égale à D, soit 21.5 mm, conformément à l'invention.

Des simulations numériques par éléments finis, réalisées sur un modèle de pneumatique 1400X530 R 23 tel que décrit dans la figure 3, ont montré que la mise en compression des couches les plus externes, présente dans la zone de flexion sur jante d'un pneumatique de référence tel que décrit dans le brevet EP 1 381 525, était fortement réduite, voire supprimée. Ainsi la déformation minimale de l'élément de renforcement de la couche externe 34, axialement la plus proche du crochet de jante, calculée dans la zone de flexion sur jante, passe de -1%, qui est une élongation de compression, dans le cas du pneumatique de référence, à +0.1%, qui est une élongation de traction, dans le cas du pneumatique conforme à la figure 3. Ce critère de non passage en compression des éléments de renforcement de la couche externe, axialement la plus extérieure, permet de garantir une tenue mécanique desdits éléments de renforcement plus durable, donc une plus grande longévité du pneumatique.

L'invention ne doit pas être interprétée comme étant limitée aux exemples illustrés sur les figures mais peut être étendue à d'autres variantes de réalisation.

Elle peut être étendue, en particulier, à des pneumatiques dont l' armature de carcasse comprend soit une seule couche interne et une seule couche externe, soit plus de deux couches internes et plus de deux couches externes.

Elle peut être étendue également à des pneumatiques dont le bourrelet comprend au moins deux mélanges polymériques de remplissage.

Elle peut être étendue, enfin, à des pneumatiques dont les matériaux constitutifs des éléments de renforcement des couches d'armature sont, de manière non limitative, le carbone, le verre ...

## Revendications

1. Pneumatique d'avion, dont la pression de gonflage est supérieure à 9 bars et la flèche supérieure à 30%, comprenant une bande de roulement, réunie par l'intermédiaire de deux flancs (18) à deux bourrelets (17) assurant la liaison du pneumatique avec une jante de montage (19) et comportant au moins une tringle (15), une armature de carcasse, comprenant au moins une couche interne (11,12), enroulée autour de la tringle en allant de l'intérieur vers l'extérieur du pneumatique pour former un retournement se terminant par une extrémité (111,112), et au moins une couche externe (13,14), enroulée autour de la tringle en allant de l'extérieur vers l'intérieur du pneumatique, et axialement extérieure, dans le flanc, à toute couche interne, la couche interne, axialement la plus proche de la tringle, étant découplée sur au moins une partie de sa longueur, dans la zone adjacente et radialement extérieure à la tringle, des retournements et des couches d'armature de carcasse qui lui sont axialement extérieurs, par au moins un mélange polymérique de remplissage de bourrelet. (16), dont le point radialement le plus extérieur C est appelé point de couplage, **caractérisé en ce que** l'extrémité d'au moins un retournement est radialement intérieure au point de couplage, et **en ce qu'**au moins un retournement, d'extrémité radialement intérieure au point de couplage, est découplé, sur au moins une partie de sa longueur et sur au moins sa face axialement extérieure, de toute autre couche d'armature de carcasse ou de tout autre retournement, par au moins un mélange polymérique de remplissage de bourrelet.

2. Pneumatique selon la revendication 1, **caractérisé en ce que**, dans le cas d'une armature de carcasse comprenant au moins deux couches internes, au moins un retournement a une extrémité radialement extérieure au point de couplage et **en ce qu'**il est couplé, sur au moins une partie de sa longueur et sur ses deux faces, avec les couches d'armature de carcasse adjacentes.

3. Pneumatique selon la revendication 1, **caractérisé en ce que** tous les retournements ont des extrémités radialement intérieures au point de couplage.

4. Pneumatique selon l'une quelconque des revendications 1 à 3, **caractérisé en ce qu'**au moins un retournement, d'extrémité radialement intérieure au point de couplage, est couplé, sur au moins une partie de sa longueur et sur au moins une face, avec au moins une couche d'armature de carcasse ou au moins un retournement.

5. Pneumatique selon l'une quelconque des revendications 1 à 4, **caractérisé en ce que** tous les retournements, d'extrémités radialement intérieures au point de couplage, sont découplés, sur au moins une partie de leur longueur et sur leurs deux faces, de toute autre couche d'armature de carcasse et de tout autre retournement.

6. Pneumatique selon l'une quelconque des revendications 1 à 5, **caractérisé en ce qu'**au moins un retournement, d'extrémité radialement intérieure au point de couplage, est couplé avec au moins une couche d'armature de carcasse ou un retournement, sur au moins une face et sur une distance d_{c} au moins égale à dix fois le diamètre d'un élément de renforcement de couche d'armature de carcasse.

7. Pneumatique selon l'une quelconque des revendications 1 à 6, **caractérisé en ce que** l'extrémité de retournement, radialement intérieure au point de couplage et radialement la plus proche du point de couplage, est positionnée, par rapport au point O de la tringle radialement le plus intérieur, à une distance radiale d_{z max} au plus égale à 0.9 fois H, H étant la distance radiale du point de couplage au point O de la tringle radialement le plus intérieur.

8. Pneumatique selon l'une quelconque des revendications 1 à 7, **caractérisé en ce que** l'extrémité de retournement, radialement intérieure au point de couplage et radialement la plus proche du point O de la tringle radialement le plus intérieur, est positionnée, par rapport au point O de la tringle radialement le plus intérieur, à une distance radiale d_{z min} au moins égale au diamètre D du cercle circonscrit à une section méridienne de la tringle.

9. Pneumatique selon l'une quelconque des revendications 1 à 8, **caractérisé en ce que** les éléments de renforcement des couches d'armature de carcasse sont constitués de matériaux textiles.

10. Pneumatique selon la revendication 9, **caractérisé en ce que** les éléments de renforcement des couches d'armature de carcasse sont de type polyamide aromatique, polyamide aliphatique ou hybride.

11. Pneumatique selon l'une quelconque des revendications 1 à 10, **caractérisé en ce qu'**un mélange polymérique de remplissage de bourrelet a un module d'extension sécant à 10% de déformation au moins égal à 3 MPA.

12. Pneumatique selon l'une quelconque des revendications 1 à 11, **caractérisé en ce que** le bourrelet comprend au moins deux mélanges polymériques de remplissage de bourrelet, dont au moins un adjacent à la tringle.

13. Pneumatique selon la revendication 12, **caractérisé en ce que** le module d'extension sécant à 10% de déformation du mélange polymérique de remplissage de bourrelet, adjacent et radialement extérieur à la tringle, est au moins égal aux modules d'extension sécants à 10% de déformation des autres mélanges polymériques de remplissage de bourrelet.

## Claims

1. Airplane tyre, having an inflation pressure greater than 9 bar and a deflection greater than 30%, comprising a tread connected by two sidewalls (18) to two beads (17) providing the connection between the tyre and a wheel rim (19) and comprising at least one bead core (15), a carcass reinforcement comprising at least one inner layer (11, 12) wrapped around the bead core in a direction proceeding from the inside to the outside of the tyre to form a turn-up terminating at an end (111, 112), and at least one outer layer (13, 14) wrapped around the bead core in a direction proceeding from the outside to the inside of the tyre, and axially outward, within the sidewall, of any inner layer, and the inner layer that is axially nearest the bead core being decoupled for at least part of its length, in the area adjacent to and radially outward of the bead core, from the turn-ups and carcass reinforcement layers which are axially outward of it, by at least one polymeric bead filler compound (16), whose radially outermost point C is termed the coupling point, **characterized in that** the end of at least one turn-up is radially inward of the coupling point, and **in that** at least one turn-up, whose end is radially inward of the coupling point, is decoupled for at least part of its length and on at least its axially outward face from any other carcass reinforcement layer or from any other turn-up by at least one polymeric bead filler compound.

2. Tyre according to Claim 1, **characterized in that**, in the case of a carcass reinforcement comprising at least two inner layers, at least one turn-up has an end radially outward of the coupling point and **in that** it is coupled, for at least part of its length and on both of its faces, to the adjacent carcass reinforcement layers.

3. Tyre according to Claim 1, **characterized in that** all the turn-ups have ends radially inward of the coupling point.

4. Tyre according to any one of Claims 1 to 3, **characterized in that** at least one turn-up, whose end is radially inward of the coupling point, is coupled, for at least part of its length and on at least one face, to at least one carcass reinforcement layer or to at least one turn-up.

5. Tyre according to any one of Claims 1 to 4, **characterized in that** all the turn-ups, whose ends are radially inward of the coupling point, are decoupled, for at least part of their length and on both of their faces, from any other carcass reinforcement layer and from any other turn-up.

6. Tyre according to any one of Claims 1 to 5, **characterized in that** at least one turn-up, whose end is radially inward of the coupling point, is coupled to at least one carcass reinforcement layer or turn-up, on at least one face and for a distance d_{c} greater than or equal to ten times the diameter of a reinforcing element of a carcass reinforcement layer.

7. Tyre according to any one of Claims 1 to 6, **characterized in that** the turn-up end radially inward of the coupling point and radially nearest the coupling point is positioned, with respect to the radially innermost point O of the bead core, at a radial distance d_{z max} less than or equal to 0.9 times H, H being the radial distance between the coupling point and the radially innermost point O of the bead core.

8. Tyre according to any one of Claims 1 to 7, **characterized in that** the turn-up end, radially inward of the coupling point and radially nearest the radially innermost point O of the bead core, is positioned, with respect to the radially innermost point O of the bead core, at a radial distance d_{z min} greater than or equal to the diameter D of the circle circumscribed around a meridian section of the bead core.

9. Tyre according to any one of Claims 1 to 8, **characterized in that** the reinforcing elements of the carcass reinforcement layers are made of textile materials.

10. Tyre according to Claim 9, **characterized in that** the reinforcing elements of the carcass reinforcement layers are of aromatic polyamide, aliphatic polyamide or hybrid type.

11. Tyre according to any one of Claims 1 to 10, **characterized in that** a polymeric bead filler compound has a secant modulus of extension at 10% deformation greater than or equal to 3 MPa.

12. Tyre according to any one of Claims 1 to 11, **characterized in that** the bead comprises at least two polymeric bead filler compounds, at least one of which is adjacent to the bead core.

13. Tyre according to Claim 12, **characterized in that** the secant modulus of extension at 10% deformation of the polymeric bead filler compound adjacent to and radially outward of the bead core is greater than or equal to the secant moduli of extension at 10% deformation of the other polymeric bead filler compounds.

## Patentansprüche

1. Flugzeugreifen, dessen Fülldruck höher als 9 Bar und die Einfederung höher als 30 % ist, der einen Laufstreifen, der mittels zweier Flanken (18) mit zwei Wülsten (17) vereint ist, die die Verbindung des Luftreifens mit einer Montagefelge (19) gewährleisten und mindestens einen Wulstkern (15) aufweisen, und eine Karkassenbewehrung enthält, die mindestens eine Innenschicht (11, 12), die um den Wulstkern gewickelt ist, indem sie von der Innenseite zur Außenseite des Luftreifens geht, um einen Umschlag zu formen, der in einem Ende (111, 112) endet, und mindestens eine Außenschicht (13, 14) enthält, die um den Wulstkern gewickelt ist, indem sie von der Außenseite zur Innenseite des Luftreifens geht und in der Flanke zu jeder Innenschicht axial außen liegt, wobei die dem Wulstkern axial am nächsten liegende Innenschicht auf mindestens einem Teil ihrer Länge in der dem Wulstkern benachbarten und radial außen zu diesem liegenden Zone von den Umschlägen und den Karkassenbewehrungsschichten, die zu ihr axial außen liegen, durch mindestens eine Wulstfüllung-Polymermischung (16) abgekoppelt ist, deren radial am weitesten außen liegende Punkt C Kopplungspunkt genannt wird, **dadurch gekennzeichnet, dass** das Ende mindestens eines Umschlags bezüglich des Kopplungspunkts radial innen liegt, und dass mindestens ein Umschlag mit einem Ende radial innen bezüglich des Kopplungspunkts auf mindestens einem Teil seiner Länge und auf mindestens seiner axial äußeren Seite von jeder anderen Karkassenbewehrungsschicht oder jedem anderen Umschlag durch mindestens eine Wulstfüllung-Polymermischung abgekoppelt ist.

2. Luftreifen nach Anspruch 1, **dadurch gekennzeichnet, dass** im Fall einer Karkassenbewehrung, die mindestens zwei Innenschichten enthält, mindestens ein Umschlag ein Ende radial außen bezüglich des Kopplungspunkts hat, und dass er auf mindestens einem Teil seiner Länge und auf seinen zwei Seiten mit den benachbarten Karkassenbewehrungsschichten gekoppelt ist.

3. Luftreifen nach Anspruch 1, **dadurch gekennzeichnet, dass** alle Umschläge bezüglich des Kopplungspunkts radial innere Enden haben.

4. Luftreifen nach einem der Ansprüche 1 bis 3, **dadurch gekennzeichnet, dass** mindestens ein Umschlag mit einem bezüglich des Kopplungspunkts radial inneren Ende auf mindestens einem Teil seiner Länge und auf mindestens einer Seite mit mindestens einer Karkassenbewehrungsschicht oder mindestens einem Umschlag gekoppelt ist.

5. Luftreifen nach einem der Ansprüche 1 bis 4, **dadurch gekennzeichnet, dass** alle Umschläge mit bezüglich des Kopplungspunkts radial inneren Enden auf mindestens einem Teil ihrer Länge und auf ihren zwei Seiten von jeder anderen Karkassenbewehrungsschicht und jedem anderen Umschlag abgekoppelt sind.

6. Luftreifen nach einem der Ansprüche 1 bis 5, **dadurch gekennzeichnet, dass** mindestens ein Umschlag mit einem bezüglich des Kopplungspunkts radial inneren Ende mit mindestens einer Karkassenbewehrungsschicht oder einem Umschlag auf mindestens einer Seite und über eine Strecke d_{c} mindestens gleich zehn Mal der Durchmesser eines Karkassenbewehrungsschicht-Verstärkungselements gekoppelt ist.

7. Luftreifen nach einem der Ansprüche 1 bis 6, **dadurch gekennzeichnet, dass** das bezüglich des Kopplungspunkts radial innere und dem Kopplungspunkt radial am nächsten liegende Umschlagende bezüglich des radial am weitesten innen liegenden Punkts O des Wulstkerns in einem radialen Abstand d_{z max} höchstens gleich 0,9 Mal H positioniert ist, wobei H der radiale Abstand des Kopplungspunkts zum radial am weitesten innen liegenden Punkt O des Wulstkerns ist.

8. Luftreifen nach einem der Ansprüche 1 bis 7, **dadurch gekennzeichnet, dass** das bezüglich des Kopplungspunkts radial innen liegende und dem radial am weitesten innen liegenden Punkt O des Wulstkerns radial am nächsten liegende Umschlagende bezüglich des radial am weitesten innen liegenden Punkts O des Wulstkerns in einem radialen Abstand d_{z min} mindestens gleich dem Durchmesser D des Umkreises eines Meridianquerschnitts des Wulstkerns positioniert ist.

9. Luftreifen nach einem der Ansprüche 1 bis 8, **dadurch gekennzeichnet, dass** die Verstärkungselemente der Karkassenbewehrungsschichten aus textilen Werkstoffen bestehen.

10. Luftreifen nach Anspruch 9, **dadurch gekennzeichnet, dass** die Verstärkungselemente der Karkassenbewehrungsschichten vom Typ aromatisches Polyamid, aliphatisches oder hybrides Polyamid sind.

11. Luftreifen nach einem der Ansprüche 1 bis 10, **dadurch gekennzeichnet, dass** eine Wulstfüllung-Polymermischung einen Dehnungs-Sekantenmodul bei 10 % Verformung mindestens gleich 3 MPa hat.

12. Luftreifen nach einem der Ansprüche 1 bis 11, **dadurch gekennzeichnet, dass** der Wulst mindestens zwei Wulstfüllung-Polymermischungen enthält, von denen mindestens eine dem Wulstkern benachbart ist.

13. Luftreifen nach Anspruch 12, **dadurch gekennzeichnet, dass** der Dehnungs-Sekantenmodul bei 10 % Verformung der Wulstfüllung-Polymermischung, die dem Wulstkern benachbart ist und radial außen zu ihm liegt, mindestens gleich den Dehnungs-Sekantenmodulen bei 10 % Verformung der anderen Wulstfüllung-Polymermischungen ist.
